(19) Europäisches Patentamt
European Patent Office
Office européen des brevets

(11) **EP 4 631 911 A1**

(12) **EUROPEAN PATENT APPLICATION**

(43) Date of publication:
**15.10.2025 Bulletin 2025/42**

(21) Application number: 25167634.2

(22) Date of filing: **01.04.2025**

(51) International Patent Classification (IPC):
***C01B 21/068*** (2006.01)

(52) Cooperative Patent Classification (CPC):
**C01B 21/0682; C01B 21/068; C01B 21/0687**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.04.2024 JP 2024059538**

(71) Applicant: **Denka Company Limited
Tokyo 103-8338 (JP)**

(72) Inventors:
• **NAKAMURA, Yuzo
Chuo-ku, Tokyo, 103-8338 (JP)**
• **MIYASHITA, Toshiyuki
Chuo-ku, Tokyo, 103-8338 (JP)**

(74) Representative: **Hoffmann Eitle
Patent- und Rechtsanwälte PartmbB
Arabellastraße 30
81925 München (DE)**

(54) **SILICON NITRIDE POWDER**

(57)     [Problem] To provide a silicon nitride powder having an appearance that is white in color, with suppressed blackness. [Solution] A silicon nitride powder containing silicon nitride, non-nitride silicon, and oxygen, wherein a ratio ($R_{Si}/R_O$) of a mass ratio $R_{Si}$ of non-nitride silicon in the silicon nitride powder with respect to a mass ratio $R_O$ of oxygen in the silicon nitride powder is 0.19 or lower.

**EP 4 631 911 A1**

**Description**

**TECHNICAL FIELD**

The present invention relates to a silicon nitride powder.

**BACKGROUND**

Silicon nitride is a material having excellent strength, hardness, toughness, heat resistance, corrosion resistance, thermal shock resistance, etc. For this reason, silicon nitride sintered compacts are utilized in various types of industrial parts for die-casting machines, melting furnaces, etc., and in automotive parts, etc. Additionally, silicon nitride sintered compacts also have excellent mechanical properties at high temperatures. Thus, their use in gas turbine parts, in which high-temperature strength and high-temperature creep properties are sought, is being investigated.

Carbon and oxygen included in silicon nitride powders, which are sintering raw materials, are known to affect the strength of silicon nitride sintered compacts. Patent Document 1 proposes to reduce the amounts of oxygen and carbon by using a silicon nitride powder obtained by imide decomposition in order to obtain a silicon nitride sintered compact with high strength. Additionally, Patent Document 2 proposes technology for obtaining a silicon nitride sintered compact having high bending strength by using a silicon nitride powder in which the $\beta$-phase percentage is 30-100% and in which the oxygen content is less than 0.5 wt%.

**CITATION LIST**

**PATENT LITERATURE**

Patent Document 1: JP H5-193914 A

Patent Document 2: JP 2004-262756 A

**SUMMARY OF INVENTION**

**TECHNICAL PROBLEM**

Although silicon nitride powders, which are the raw materials of silicon nitride sintered compacts, are normally white in appearance, some silicon nitride powders can be tinged with blackness depending on the production lot. Although the appearance of a silicon nitride powder is thought to change in accordance with slight differences in raw materials and conditions when producing the silicon nitride powder, the specific causes have not been made clear. If there are differences in color in the appearance of silicon nitride powders between production lots, there can be considered to be differences in the properties of the silicon nitride powders, and furthermore, there can be considered to be a possibility that the properties of the silicon nitride sintered compacts produced from the silicon nitride powders will also be affected.

Therefore, an objective of the present invention is to provide a silicon nitride powder having an appearance that is white in color, with suppressed blackness.

**SOLUTION TO PROBLEM**

The present invention, for example, includes the following [1] to [9].

[1] A silicon nitride powder containing silicon nitride, non-nitride silicon, and oxygen, wherein:
a ratio ($R_{Si}/R_O$) of a mass ratio $R_{Si}$ of the non-nitride silicon in the silicon nitride powder with respect to a mass ratio $R_O$ of the oxygen in the silicon nitride powder is 0.19 or lower.

[2] The silicon nitride powder according to [1], wherein:

the silicon nitride powder further contains carbon, and

a ratio ($R_{Si} \times R_C/R_O$) of a product of the mass ratio $R_{Si}$ and a mass ratio $R_C$ of the carbon in the silicon nitride powder with respect to the mass ratio $R_O$ of the oxygen in the silicon nitride powder is $2 \times 10^{-4}$ or lower.

[3] The silicon nitride powder according to [1] or [2], wherein:

the silicon nitride powder further contains carbon, and
a ratio $((R_{Si} + R_C)/R_O)$ of a sum of the mass ratio $R_{Si}$ and a mass ratio $R_C$ of the carbon in the silicon nitride powder with respect to the mass ratio $R_O$ of the oxygen in the silicon nitride powder is 0.25 or lower.

[4] The silicon nitride powder according to any one of [1]-[3], wherein:

the silicon nitride powder further contains iron, and
a ratio $(R_{Si} \times R_{Fe}/R_O)$ of a product of the mass ratio $R_{Si}$ and a mass ratio $R_{Fe}$ of the iron in the silicon nitride powder with respect to the mass ratio $R_O$ of the oxygen in the silicon nitride powder is $2.5 \times 10^{-4}$ or lower.

[5] The silicon nitride powder according to any one of [1]-[4], wherein:

the silicon nitride powder further contains iron, and

a ratio $((R_{Si} + R_{Fe})/R_O)$ of a sum of the mass ratio $R_{Si}$ and a mass ratio $R_{Fe}$ of the iron in the silicon nitride powder with respect to the mass ratio $R_O$ of the oxygen in the silicon nitride powder is 0.25 or lower.

[6] The silicon nitride powder according to any one of [1]-[5], wherein:

the silicon nitride powder further contains iron and carbon, and

a ratio $(R_{Si} \times R_C \times R_{Fe}/R_O)$ of a product of the mass ratio $R_{Si}$, a mass ratio $R_C$ of the carbon in the silicon nitride powder, and a mass ratio $R_{Fe}$ of the iron in the silicon nitride powder with respect to the mass ratio $R_O$ of the oxygen in the silicon nitride powder is $3 \times 10^{-7}$ or lower.

[7] The silicon nitride powder according to any one of claims [1]-[6], wherein:

the silicon nitride powder further contains iron and carbon, and

a ratio $((R_{Si} + R_C + R_{Fe})/R_O)$ of a sum of the mass ratio $R_{Si}$, a mass ratio $R_C$ of the carbon in the silicon nitride powder, and a mass ratio $R_{Fe}$ of the iron in the silicon nitride powder with respect to the mass ratio $R_O$ of the oxygen in the silicon nitride powder is 0.35 or lower.

[8] The silicon nitride powder according to any one of [1]-[7], wherein the mass ratio $R_{Si}$ is 0.003 or lower.

[9] The silicon nitride powder according to any one of [1]-[8], wherein an $\alpha$-phase percentage is 91% or higher.

## ADVANTAGEOUS EFFECTS OF INVENTION

According to the present invention, a silicon nitride powder having an appearance that is white in color, with suppressed blackness, can be provided.

## DESCRIPTION OF EMBODIMENTS

Hereinafter, embodiments of the present invention will be explained. However, the embodiments below are merely examples for explaining the present invention, and are not intended to limit the present invention to the subject matter below. The numerical ranges indicated by the symbol "-" include the lower limit values and the upper limit values. That is, the numerical range indicated by "x-y" means x or more and y or less. The present invention also includes numerical ranges in which the upper limits or the lower limits of the respective numerical ranges in the respective embodiments are replaced with numerical values from any of the examples. The present invention includes both cases in which one of multiple materials listed as examples in each embodiment is included alone, and cases in which two or more of the multiple materials are combined. In the present specification, the mass ratios of the respective components in the silicon nitride powder, where not explicitly indicated in particular, refer to mass ratios of the respective components with respect to the silicon nitride powder overall.

The silicon nitride powder ($Si_3N_4$ powder) according to one embodiment is a silicon nitride powder containing silicon nitride, non-nitride silicon, and oxygen, wherein the ratio ($R_{Si}/R_O$) of the mass ratio $R_{Si}$ of non-nitride silicon in the silicon nitride powder with respect to the mass ratio $R_O$ of oxygen in the silicon nitride powder is 0.19 or lower.

The present inventor, upon investigating, found that the appearance of a silicon nitride powder tends to become whiter as the mass ratio of non-nitride silicon in the silicon nitride powder becomes lower, and that the appearance of the silicon nitride powder tends to become whiter as the mass ratio of oxygen in the silicon nitride powder becomes lower. For this reason, the appearance of a silicon nitride powder can be made white in color and the blackness can be suppressed by the ratio ($R_{Si}/R_O$) of the mass ratio $R_{Si}$ of non-nitride silicon in the silicon nitride powder with respect to the mass ratio $R_O$ of oxygen in the silicon nitride powder being small to a certain degree.

The mass ratio $R_{Si}$ of non-nitride silicon in the silicon nitride powder may be 0.003 or lower, 0.0025 or lower, 0.002 or lower, or 0.0015 or lower from the aspect of better suppressing the blackness of the silicon nitride powder. The mass ratio $R_{Si}$ may be 0.001 or higher from the aspect of the production cost. The non-nitride silicon in the silicon nitride powder refers to silicon other than silicon nitride. The mass ratio $R_{Si}$ can be measured by a method as described in the examples below.

The mass ratio $R_{Si}$ of non-nitride silicon in the silicon nitride powder can be made lower, for example, by setting the firing temperature of a firing step to a high temperature, or by setting the time of the firing step to be longer. Additionally, the mass ratio of non-nitride silicon can be made lower by wet-milling the silicon nitride powder.

The mass ratio $R_O$ of oxygen in the silicon nitride powder may be 0.0165 or lower, 0.016 or lower, 0.0155 or lower, or 0.015 or lower from the aspect of improving the sintering properties of the silicon nitride powder. The mass ratio $R_O$ may be 0.012 or higher, 0.0125 or higher, or 0.013 or higher from the aspect of better suppressing the blackness of the silicon nitride powder. The mass ratio $R_O$ can be measured by a method as described in the examples below.

The mass ratio $R_O$ of oxygen in the silicon nitride powder can be adjusted, for example, by performing an acid treatment on the silicon nitride powder to remove oxygen from the surfaces of the silicon nitride powder.

The ratio ($R_{Si}/R_O$) of the mass ratio $R_{Si}$ of non-nitride silicon in the silicon nitride powder with respect to the mass ratio $R_O$ of oxygen in the silicon nitride powder is 0.19 or lower. The ratio ($R_{Si}/R_O$) may be 0.17 or lower, 0.15 or lower, 0.13 or lower, 0.11 or lower, or 0.1 or lower from the aspect of better suppressing the blackness of the silicon nitride powder. The ratio ($R_{Si}/R_O$) may be 0.01 or higher, 0.02 or higher, 0.04 or higher, 0.06 or higher, or 0.08 or higher from the aspect of better suppressing the blackness of the silicon nitride powder.

The silicon nitride powder may further contain carbon. In the case in which the silicon nitride powder further contains carbon, the mass ratio $R_C$ of carbon in the silicon nitride powder may be $2 \times 10^{-3}$ or lower, $1.5 \times 10^{-3}$ or lower, or $1.2 \times 10^{-3}$ or lower from the aspect of better suppressing the blackness of the silicon nitride powder. The mass ratio $R_C$ may be $5 \times 10^{-4}$ or higher, $7 \times 10^{-4}$ or higher, or $9 \times 10^{-4}$ or higher from the aspect of better suppressing the blackness of the silicon nitride powder. The mass ratio $R_C$ can be measured by a method as described in the examples below.

The mass ratio $R_C$ of carbon in the silicon nitride powder can be made lower, for example, by setting the time of the degreasing step to be longer.

In the case in which the silicon nitride powder further contains carbon, the ratio ($R_{Si} \times R_C/R_O$) of the product of the mass ratio $R_{Si}$ of non-nitride silicon and the mass ratio $R_C$ of carbon with respect to the mass ratio $R_O$ of oxygen may be $2 \times 10^{-4}$ or lower, $1.5 \times 10^{-4}$ or lower, $1.2 \times 10^{-4}$ or lower, or $1 \times 10^{-4}$ or lower from the aspect of better suppressing the blackness of the silicon nitride powder. The ratio ($R_{Si} \times R_C/R_O$) may be $1 \times 10^{-5}$ or higher, $5 \times 10^{-5}$ or higher, or $8 \times 10^{-5}$ or higher from the aspect of better suppressing the blackness of the silicon nitride powder.

In the case in which the silicon nitride powder further contains carbon, the ratio (($R_{Si} + R_C)/R_O$) of the sum of the mass ratio $R_{Si}$ of non-nitride silicon and the mass ratio $R_C$ of carbon with respect to the mass ratio $R_O$ of oxygen may be 0.25 or lower, 0.23 or lower, 0.21 or lower, or 0.19 or lower from the aspect of better suppressing the blackness of the silicon nitride powder. The ratio (($R_{Si} + R_C)/R_O$) may be 0.08 or higher, 0.1 or higher, 0.12 or higher, or 0.14 or higher from the aspect of better suppressing the blackness of the silicon nitride powder.

The silicon nitride powder may further contain iron. In the case in which the silicon nitride powder further contains iron, the mass ratio $R_{Fe}$ of iron in the silicon nitride powder may be $2.5 \times 10^{-3}$ or lower, $2 \times 10^{-3}$ or lower, or $1.8 \times 10^{-3}$ or lower from the aspect of improving the sintering properties of the silicon nitride powder. The mass ratio $R_{Fe}$ may be $1 \times 10^{-4}$ or higher, $1 \times 10^{-3}$ or higher, or $1.2 \times 10^{-3}$ or higher from the aspect of the production cost. The mass ratio $R_{Fe}$ can be measured by a method as described in the examples below.

The mass ratio $R_{Fe}$ of iron in the silicon nitride powder can be adjusted, for example, by adjusting the purity of the raw material silicon.

In the case in which the silicon nitride powder further contains iron, the ratio ($R_{Si} \times R_{Fe}/R_O$) of the product of the mass ratio $R_{Si}$ of non-nitride silicon and the mass ratio $R_{Fe}$ of iron with respect to the mass ratio $R_O$ of oxygen may be $3 \times 10^{-4}$ or lower, $2.5 \times 10^{-4}$ or lower, $2 \times 10^{-4}$ or lower, or $1.6 \times 10^{-4}$ or lower from the aspect of better suppressing the blackness of the silicon nitride powder. The ratio ($R_{Si} \times R_{Fe}/R_O$) may be $5 \times 10^{-5}$ or higher, $1 \times 10^{-4}$ or higher, or $1.2 \times 10^{-4}$ or higher from the aspect of better suppressing the blackness of the silicon nitride powder.

In the case in which the silicon nitride powder further contains iron, the ratio (($R_{Si} + R_{Fe})/R_O$) of the sum of the mass ratio $R_{Si}$ of non-nitride silicon and the mass ratio $R_{Fe}$ of iron with respect to the mass ratio $R_O$ of oxygen may be 0.28 or lower, 0.25 or lower, or 0.23 or lower from the aspect of better suppressing the blackness of the silicon nitride powder. The ratio (($R_{Si} + R_{Fe})/R_O$) may be 0.1 or higher, 0.15 or higher, or 0.19 or higher from the aspect of better suppressing the blackness of the silicon nitride powder.

In the case in which the silicon nitride powder further contains carbon and iron, the ratio $(R_{Si} \times R_C \times R_{Fe}/R_O)$ of the product of the mass ratio $R_{Si}$ of non-nitride silicon, the mass ratio $R_C$ of carbon, and the mass ratio $R_{Fe}$ of iron with respect to the mass ratio $R_O$ of oxygen may be $3 \times 10^{-7}$ or lower, $2.5 \times 10^{-7}$ or lower, or $2 \times 10^{-7}$ or lower from the aspect of better suppressing the blackness of the silicon nitride powder. The ratio $(R_{Si} \times R_C \times R_{Fe}/R_O)$ may be $5 \times 10^{-3}$ or higher, $1 \times 10^{-7}$ or higher, or $1.3 \times 10^{-7}$ or higher from the aspect of better suppressing the blackness of the silicon nitride powder.

In the case in which the silicon nitride powder further contains carbon and iron, the ratio $((R_{Si} + R_C + R_{Fe})/R_O)$ of the sum of the mass ratio $R_{Si}$ of non-nitride silicon, the mass ratio $R_C$ of carbon, and the mass ratio $R_{Fe}$ of iron with respect to the mass ratio $R_O$ of oxygen may be 0.35 or lower, 0.32 or lower, or 0.3 or lower from the aspect of better suppressing the blackness of the silicon nitride powder. The ratio $((R_{Si} + R_C + R_{Fe})/R_O)$ may be 0.1 or higher, 0.18 or higher, or 0.24 or higher from the aspect of better suppressing the blackness of the silicon nitride powder.

The silicon nitride powder may further contain aluminum. In the case in which the silicon nitride powder further contains aluminum, the mass ratio $R_{Al}$ of the aluminum in the silicon nitride powder may be $2 \times 10^{-3}$ or lower, $1.6 \times 10^{-3}$ or lower, or $1.2 \times 10^{-3}$ or lower from the aspect of improving the sintering properties of the silicon nitride powder. The mass ratio $R_{Al}$ may be $5 \times 10^{-4}$ or higher, or $7 \times 10^{-4}$ or higher from the aspect of the production cost. The mass ratio $R_{Al}$ can be measured by a method as described in the examples below.

The mass ratio $R_{Al}$ of aluminum in the silicon nitride powder can be adjusted, for example, by adjusting the purity of the raw material silicon.

The silicon nitride powder may further contain calcium. In the case in which the silicon nitride powder further contains calcium, the mass ratio $R_{Ca}$ of calcium in the silicon nitride powder may be $2.5 \times 10^{-3}$ or lower, or $2.2 \times 10^{-3}$ or lower from the aspect of improving the sintering properties of the silicon nitride powder. The mass ratio $R_{Ca}$ may be $8 \times 10^{-4}$ or higher, $1.5 \times 10^{-3}$ or higher, or $2 \times 10^{-3}$ or higher from the aspect of the production cost. The mass ratio $R_{Ca}$ can be measured by a method as described in the examples below.

The mass ratio $R_{Ca}$ of calcium in the silicon nitride powder can be adjusted, for example, by adjusting the purity of the raw material silicon.

The BET specific surface area of the silicon nitride powder may be 15 $m^2/g$ or lower, 13 $m^2/g$ or lower, 11 $m^2/g$ or lower, 9 $m^2/g$ or lower, 7 $m^2/g$ or lower, or 6.7 $m^2/g$ or lower from the aspect of better suppressing the blackness of the silicon nitride powder. The BET specific surface area of the silicon nitride powder may be 5 $m^2/g$ or higher, or 6 $m^2/g$ or higher from the aspect of better suppressing the blackness of the silicon nitride powder. The BET specific surface area in the present description is a value measured by the BET single-point method using nitrogen gas in accordance with the method described in JIS Z 8830:2013, "Determination of the specific surface area of powders (solids) by gas adsorption-BET method". The BET specific surface area, in the case of a direct nitridation process, can be adjusted by changing the pulverization conditions when pulverizing the fired material after nitridation.

The α-phase percentage of the silicon nitride powder may be 91% or higher. The β phase tends to form more easily when such a silicon nitride powder is used as a sintering raw material. Therefore, the strength can be made sufficiently high while keeping the density of the silicon nitride sintered compact sufficiently low. The α-phase percentage of the silicon nitride powder may be 97% or lower, 95% or lower, or 94% or lower from the aspect of further reducing the production cost. The α-phase percentage of the silicon nitride powder can be determined based on diffraction line intensities in X-ray diffraction. The α-phase percentage of the silicon nitride powder, in the case of a direct nitridation process, can be adjusted by changing the heating conditions during nitridation. For example, if the heating temperature is made higher, the β phase tends to form, thereby lowering the α-phase percentage.

The average particle diameter (D50, median diameter) of the silicon nitride powder may be 0.7-2 μm, or may be 1-1.6 μm. The particle diameter distribution in the present description is measured in accordance with the method described in JIS Z 8825:2013, "Particle size analysis-Laser diffraction methods". In a particle diameter distribution (cumulative distribution) indicated with the particle diameter [μm], on a logarithmic scale, on the horizontal axis, and with frequency [vol%] on the vertical axis, the particle diameter when the cumulative value from smaller particle diameters becomes 50% of the total is the above-mentioned average particle diameter (D50).

The particle diameter (D10) when the cumulative value from smaller particle diameters becomes 10% of the total in the above-mentioned particle diameter distribution may be 0.3-0.7 μm, or may be 0.4-0.6 μm. The particle diameter (D90) when the cumulative value from smaller particle diameters becomes 90% of the total in the above-mentioned particle diameter distribution may be 3-6.5 μm, or may be 3.5-6 μm.

The above-mentioned silicon nitride powder can be favorably used as a sintering raw material. Though the silicon nitride powder may be used for the purpose of obtaining a silicon nitride sintered compact, the purpose of use is not limited thereto. The silicon nitride content in the silicon nitride powder may be 95 mass% or higher, 98 mass% or higher, or 99 mass% or higher. The silicon nitride content in the silicon nitride powder can be measured, for example, by X-ray diffraction.

The method for producing the silicon nitride powder according to one embodiment includes: a molding step of molding a kneaded material including a silicon powder and an organic binder to obtain a molded body; a degreasing step of degreasing the molded body by heating the molded body for 1 hour or more at 900 °C or higher and lower than 1100 °C; a firing step of firing the molded body in a mixed-gas atmosphere containing nitrogen and at least one gas selected from the group consisting of hydrogen and ammonia to obtain a fired material containing silicon nitride; and a pulverizing step of pulverizing the fired material.

The oxygen content in the silicon powder used in the molding step may, for example, be 0.2-0.6 mass%. The carbon content in the silicon powder may be 0.05-0.10 mass%. The oxygen content and the carbon content in the silicon powder can be measured by an infrared absorption method. In order to adjust the oxygen concentration before the molding step, a pretreatment solution containing hydrofluoric acid may be used to reduce the oxygen bound to the silicon powder. The pretreatment solution may contain hydrofluoric acid and may be a mixed acid with an acid such as hydrochloric acid.

Organic binders include urethane resins, vinyl butyral resins, vinyl alcohol resins, vinyl acetal resins, vinyl formal resins, polyimide resins, phenol resins, melamine resins, epoxy resins, coumarone indene resins, acrylic resins, aromatic vinyl resins, cellulose and cellulose derivatives, waxes, starches, etc. The blended amount of the organic binder may be, for example 3-30 parts by mass, or may be 5-20 parts by mass with respect to 100 parts by mass of the silicon powder.

The kneaded material may contain a solvent. Solvents include water, alcohols, ketones, esters, ethers, aromatic hydrocarbons, polybasic acids, etc. Such a kneaded material is molded by a normal molding method to prepare a molded body. Molding methods include, for example, extrusion molding, uniaxial press molding, etc. The bulk density of the molded body after drying may be 0.5-1.5 $g/cm^3$, or may be 0.8-1.2 $g/cm^3$.

In the degreasing step, the molded body is heated in a heating furnace to decompose and/or evaporate and remove at least some of the organic binder contained in the molded body. When a solvent is used, the degreasing step may be preceded by a drying step of heating the molded body to the boiling point of the solvent or higher.

In the degreasing step, the molded body is heated, for example, for 1 hour or more at 900 °C or higher and lower than 1100 °C in an atmosphere containing hydrogen gas. As a result thereof, the organic binder contained in the molded body can be efficiently reduced. The heating temperature in the degreasing step may be 950-1050 °C. The heating time during the degreasing step may be 2 hours or more, or may be 3 hours or more from the aspect of sufficiently reducing the organic binder in the molded body. The heating time in the degreasing step may be 20 hours or less, or 10 hours or less from the aspect of improving the efficiency of the production process. One example of the range of the heating time in the degreasing step is 1-20 hours. The atmosphere may be hydrogen gas, or may be a mixed gas in which the concentration of hydrogen gas is 1.0-10.0 vol%. This volume percentage is the value in a standard state (temperature 0 °C, pressure 1 atm).

In the firing step, the degreased molded body is fired in a mixed atmosphere containing nitrogen and at least one type of gas selected from the group consisting of hydrogen and ammonia to obtain a fired material containing silicon nitride. Carbon may be included inside the silicon nitride particles, or may be adhered or bound, as particles, to the surfaces of the silicon nitride particles. The total hydrogen and ammonia content in the mixed atmosphere may be, for example, 10-40 vol% with respect to the mixed atmosphere overall. The firing temperature may be, for example, 1100-1500 °C, or may be 1200-1450 °C. The firing time may be, for example 30-100 hours, or 50-90 hours. As the firing temperature and time, 1200-1450 °C and 50-90 hours are preferably used.

In the pulverizing step, the above-mentioned fired material obtained in the firing step is pulverized in a dry manner to obtain a pulverized material. The pulverizing step may be performed in multiple stages including crude pulverization and fine pulverization to adjust the particle size distribution of the silicon nitride powder. For example, the pulverizing step may include two steps, i.e., a ball mill pulverizing step and a vibrating mill pulverizing step. After the fired material has been pulverized, wet pulverization may be further performed. After the fired material has been pulverized, a classifying step may be performed to adjust the particle size.

The pulverizing step or the classifying step may be followed by a post-treatment step for adjusting the oxygen concentration. In the post-treatment step, for example, the fired material that has been pulverized may be treated by being dispersed in hydrofluoric acid. Thereafter, filtration and drying can be performed to obtain a silicon nitride powder.

The silicon nitride powder can be produced by such a method. This production method can produce the silicon nitride powder at a production cost lower than that of the imide decomposition method. The shape, composition, and properties of the silicon nitride powder obtained by this production method are as described in connection with the embodiments of the silicon nitride powder. Therefore, the subject matter described regarding the embodiments of the silicon nitride powder is also applicable to the production method in the present embodiment. However, the above-mentioned production method is merely one example, and the method for producing the silicon nitride powder is not limited to the above-mentioned production method.

The method for producing the silicon nitride sintered compact according to one embodiment includes a sintering step of molding and firing sintering raw materials including the above-mentioned silicon nitride powder.

The sintering raw materials may include an oxide-based sintering aid in addition to the silicon nitride powder. Oxide-based sintering aids include, for example, $Y_2O_3$, MgO, $Al_2O_3$, etc. The oxide-based sintering aid content in the sintering raw material may be, for example, 3-10 mass%.

In the sintering step, the above-mentioned sintering raw material is pressed at a molding pressure of, for example, 3.0-30 MPa to obtain a molded body. The molded body may be prepared by uniaxial pressing, or may be prepared by CIP. Additionally, it may be fired while molding by means of a hot press. The firing of the molded body may be performed in an inert gas atmosphere such as nitrogen gas or argon gas. The pressure at the time of firing may be 0.7-1.5 MPa. The firing temperature may be 1860-2100 °C, and may be 1880-2000 °C. The firing time at said firing temperature may be 6-20 hours, and may be 8-16 hours. The temperature increase rate to the firing temperature may be, for example, 1.0-10.0 °C/hour.

In the silicon nitride sintered compact obtained in this manner, excessive densification is suppressed and a β-phase easily forms. Thus, the silicon nitride sintered compact is low in density while being high in strength. The composition and properties of the silicon nitride sintered compact obtained by this production method are as described in connection with the embodiments of the silicon nitride sintered compact. Therefore, the subject matter described regarding the embodiments of the silicon nitride sintered compact is also applicable to the production method in the present embodiment. However, the above-mentioned production method is merely one example, and the method for producing the silicon nitride sintered compact is not limited to the above-mentioned production method.

**EXAMPLES**

Hereinafter, the subject matter of the present invention will be described in further detail by referring to examples and comparative examples. However, the present invention is not limited to the examples indicated below.

(Example 1)

<Preparation of silicon nitride powder>

A kneaded material was obtained by kneading a silicon powder (oxygen content 0.3 mass%, carbon content 0.10 mass%), an organic binder (vinyl alcohol resin), and a solvent (water). The blended amount of the organic binder with respect to 100 parts by mass of the silicon powder was 10 parts by mass. This kneaded material was used to prepare a molded body (bulk density 1.0 g/cm$^3$) by uniaxial press molding (molding pressure 8 MPa). The molded body that was obtained was dried for 3 hours in a thermostatic chamber at 150 °C (drying step). After being dried, the molded body was placed at rest inside an electric furnace and held for 2 hours at a temperature of 1000 °C in a hydrogen gas atmosphere (degreasing step).

After being degreased, the molded body was placed in another electric furnace and fired for 60 hours at 1400 °C to obtain a fired material containing silicon nitride. As the atmosphere at the time of firing, a mixed gas of nitrogen gas and hydrogen gas (a mixed gas in which $N_2$ and $H_2$ were mixed so that the volume ratio was 80%:20% in the standard state) was supplied. The fired material that was obtained was crude-pulverized, then dry-pulverized in a ball mill. The silicon nitride powder obtained by dry pulverization was classified by using a classifier.

Crude particles (aggregated particles) were removed from the silicon nitride powder by the classification. The mass ratio of the silicon nitride powder after classification with respect to the overall mass of the silicon nitride powder before classification was 80%. The silicon nitride powder after classification refers to the silicon nitride powder obtained by removing the crude particles. The silicon nitride powder obtained in this way was evaluated as indicated below.

<Measurement of mass ratio of non-nitride silicon>

A sample of the obtained silicon nitride powder was lightly crushed in a mortar and the remaining silicon amount was quantified from a diffraction pattern obtained by using an X-ray diffractometer (device name: Multiflex, manufactured by Rigaku Corp.), and the mass ratio of non-nitride silicon was calculated.

<Measurement of mass ratios of iron, aluminum, and calcium>

The silicon nitride powder that was obtained was subjected to quantitative analysis in an atomic absorption spectrophotometer regarding metal elements detected by X-ray fluorescence spectroscopy.

<Measurement of mass ratio of oxygen>

The mass ratio of oxygen in the silicon nitride powder and the mass ratio of oxygen contained inside were measured by using an oxygen/nitrogen analyzer (device name: EMGA-920, manufactured by Horiba, Ltd.). Specifically, the silicon nitride powder was heated from 20 °C to 2000 °C at a temperature increase rate of 8 °C/s in a helium atmosphere, and the mass ratio of oxygen was determined by quantifying the amount of oxygen until before nitrogen was detected. Additionally, the mass ratio of oxygen was determined by quantifying the amount of oxygen from when nitrogen started to be detected. Furthermore, the mass ratio of oxygen and the mass ratio of oxygen were summed to determine the mass ratio $R_O$ of oxygen in the silicon nitride powder overall. Additionally, the ratios of other components with respect to the mass ratio $R_O$ of oxygen were calculated. The measurement results for the mass ratio $R_O$ of oxygen and the calculation results of the ratios are each indicated in Tables 1-3.

<Measurement of mass ratio of carbon>

A commercially available carbon/sulfur analyzer (device name: model IR412, manufactured by LECO Corp.) was used to investigate the mass ratio $R_C$ of carbon in the silicon nitride powder. As the measurement procedure, a sample was subjected to a temperature increase from 20 °C to 2000 °C at a temperature increase rate of 10 °C/s in an oxygen atmosphere. The mass ratio $R_C$ of carbon contained in the silicon nitride powder overall was determined by using an infrared detector to detect carbon monoxide and carbon dioxide that were generated as the temperature increased. The measurement results are indicated in Tables 1-3.

<Measurement of $\alpha$-phase percentage>

The $\alpha$-phase percentage in the silicon nitride powder was measured by the procedure below. An X-ray diffractometer (device name: Ultima IV, manufactured by Rigaku Corp.) was used to perform X-ray diffraction on the silicon nitride powder with Cu K$\alpha$ rays. The $\alpha$ phase was represented by the diffraction line intensity $I_{a102}$ of the (102) plane and the diffraction line intensity $I_{a210}$ of the (210) plane, and the $\beta$ phase was represented by the diffraction line intensity $I_{b101}$ of the (101) plane and the diffraction line intensity $I_{b210}$ of the (210) plane. These diffraction line intensities were used to calculate the $\alpha$-phase percentage by means of the expression below. The measurement results are indicated in Tables 1-3.

$$\alpha\text{-phase percentage (\%)} =$$

$$(I_{a102} + I_{a210})/(I_{a102} + I_{a210} + I_{b101} + I_{b210}) \times 100$$

<Measurement of BET specific surface area>

The BET specific surface area of the silicon nitride powder was measured by the BET single-point method using nitrogen gas in accordance with JIS Z 8830:2013. The measurement results are indicated in Tables 1-3.

<Measurement of particle diameter distribution>

The particle diameter distribution of the silicon nitride powder was measured by means of laser diffraction/-scattering. The measurement was performed in accordance with the method described in JIS Z 8825:2013, "Particle size analysis-Laser diffraction methods". In a particle diameter distribution (cumulative distribution) indicated with the particle diameter [$\mu$m], on a logarithmic scale, on the horizontal axis, and with frequency [vol%] on the vertical axis, the particle diameters when the cumulative value from smaller particle diameters became 10%, 50%, 90%, and 100% of the total were respectively determined as D10, D50, and D90. The measurement results are indicated in Tables 1-3.

(Examples 2-8)

Silicon nitride powders were obtained in the same manner as Example 1 except that silicon powders in lots different from that of Example 1 were used.

(Example 9)

<Preparation of silicon nitride powder>

A kneaded material was obtained by kneading a silicon powder (oxygen content 0.3 mass%, carbon content 0.10 mass%), an organic binder (vinyl alcohol resin), and a solvent (water). The blended amount of the organic binder with respect to 100 parts by mass of the silicon powder was 10 parts by mass. This kneaded material was used to prepare a molded body (bulk density 1.0 g/cm$^3$) by uniaxial press molding (molding pressure 8 MPa). The molded body that was obtained was dried for 3 hours in a thermostatic chamber at 150 °C (drying step). After being dried, the molded body was placed at rest inside an electric furnace and held for 2 hours at a temperature of 1000 °C in a hydrogen gas atmosphere (degreasing step).

After being degreased, the molded body was placed in another electric furnace and fired for 60 hours at 1400 °C to obtain a fired material containing silicon nitride. As the atmosphere at the time of firing, a mixed gas of nitrogen gas and hydrogen gas (a mixed gas in which $N_2$ and $H_2$ were mixed so that the volume ratio was 80%:20% in the standard state) was supplied. The fired material that was obtained was crude-pulverized, then dry-pulverized in a ball mill.

The silicon nitride powder obtained by dry pulverization was wet-pulverized in a ball mill. The wet pulverization was performed with the ball fill rate with respect to the container at 60 vol%, using water as the solvent, with the pulverization time set to 9 hours.

The pulverized matter obtained by wet pulverization was acid-treated by being immersed in hydrofluoric acid. Then, the pulverized matter was extracted from the hydrofluoric acid, rinsed with water, and dried in a nitrogen atmosphere. The pulverized matter obtained by drying was classified by using a classifier.

Crude particles (aggregated particles) were removed from the silicon nitride powder by the classification. The mass ratio of the silicon nitride powder after classification with respect to the overall mass of the silicon nitride powder before classification was 80%. The silicon nitride powder after classification refers to the silicon nitride powder obtained by removing the crude particles. The silicon nitride powder obtained in this way was evaluated as indicated below.

[Evaluation]

<Appearance>

The appearance of the obtained silicon nitride powder was evaluated by lightness (0-10) in the Munsell color system (in accordance with JIS Z 8721), with a lightness of 9 or higher being assessed to be white and a lightness of 8 or lower being assessed to be black. The evaluation results are indicated in Tables 1-3.

[Table 1]

| | Example 1 | Example 2 | Example 3 | Example 4 | Example 5 |
|---|---|---|---|---|---|
| $R_{Si}$ | 0.0014 | 0.0013 | 0.0013 | 0.0017 | 0.0013 |
| $R_O$ | 0.014 | 0.013 | 0.015 | 0.014 | 0.014 |
| $R_C$ | 0.00095 | 0.00086 | 0.0010 | 0.00104 | 0.00101 |
| $R_{Fe}$ | 0.0016 | 0.0012 | 0.0017 | 0.0016 | 0.0014 |
| $R_{Al}$ | 0.00090 | 0.00070 | 0.00070 | 0.00070 | 0.0011 |
| $R_{Ca}$ | 0.0020 | 0.0020 | 0.0020 | 0.0020 | 0.0020 |
| $\alpha$-Phase percentage [%] | 92.4 | 93.0 | 91.5 | 91.1 | 92.0 |
| BET specific surface area [$m^2/g$] | 6.7 | 6.7 | 6.6 | 6.2 | 6.2 |
| D10 [$\mu$m] | 0.48 | 0.49 | 0.50 | 0.48 | 0.49 |
| D50 [$\mu$m] | 1.40 | 1.26 | 1.39 | 1.43 | 1.28 |
| D90 [$\mu$m] | 5.16 | 3.75 | 5.37 | 5.50 | 4.37 |
| $R_{Si}/R_O$ | 0.10 | 0.10 | 0.08 | 0.12 | 0.09 |
| $R_{Si} \times R_C/R_O$ [$\times 10^{-4}$] | 0.9 | 0.9 | 0.8 | 1.2 | 0.9 |
| $(R_{Si} + R_C)/R_O$ | 0.16 | 0.16 | 0.15 | 0.19 | 0.16 |
| $R_{Si} \times R_{Fe}/R_O$ [$\times 10^{-4}$] | 1.6 | 1.2 | 1.4 | 1.9 | 1.3 |
| $(R_{Si} + R_{Fe})/R_O$ | 0.21 | 0.19 | 0.19 | 0.23 | 0.19 |
| $R_{Si} \times R_C \times R_{Fe}/R_O$ [$\times 10^{-7}$] | 1.5 | 1.0 | 1.4 | 2.0 | 1.3 |
| $(R_{Si} + R_C + R_{Fe})/R_O$ | 0.27 | 0.25 | 0.26 | 0.30 | 0.26 |
| Appearance | white | white | white | white | white |

[Table 2]

| | | Example 6 | Example 7 | Example 8 | Example 9 |
|---|---|---|---|---|---|
| | $R_{Si}$ | 0.0015 | 0.0013 | 0.0014 | 0.00020 |
| | $R_O$ | 0.016 | 0.016 | 0.015 | 0.0080 |
| | $R_C$ | 0.00118 | 0.00114 | 0.0010 | 0.0010 |
| | $R_{Fe}$ | 0.0017 | 0.0018 | 0.0015 | 0.00020 |
| | $R_{Al}$ | 0.0016 | 0.00090 | 0.00080 | 0.00040 |
| | $R_{Ca}$ | 0.0020 | 0.0022 | 0.0021 | 0.00090 |
| | $\alpha$-Phasepercentage [%] | 91.2 | 93.9 | 92.7 | 93.0 |
| | BET specific surface area [$m^2$/g] | 6.5 | 6.9 | 6.5 | 11.8 |
| | D10 [$\mu$m] | 0.50 | 0.48 | 0.47 | 0.30 |
| | D50 [$\mu$m] | 1.22 | 1.31 | 1.26 | 0.70 |
| | D90 [$\mu$m] | 4.20 | 5.25 | 4.50 | 2.00 |
| | $R_{Si}/R_O$ | 0.095 | 0.083 | 0.094 | 0.025 |
| | $R_{Si} \times R_C/R_O$ [$\times 10^{-4}$] | 1.1 | 0.9 | 0.9 | 0.3 |
| | $(R_{Si} + R_C)/R_O$ | 0.17 | 0.15 | 0.16 | 0.15 |
| | $R_{Si} \times R_{Fe}/R_O$ [$\times 10^{-4}$] | 1.6 | 1.5 | 1.4 | 0.05 |
| | $(R_{Si} + R_{Fe})/R_O$ | 0.20 | 0.20 | 0.20 | 0.050 |
| | $R_{Si} \times R_C \times R_{Fe}/R_O$ [$\times 10^{-7}$] | 1.9 | 1.7 | 1.4 | 0.05 |
| | $(R_{Si} + R_C + R_{Fe})/R_O$ | 0.27 | 0.27 | 0.27 | 0.18 |
| | Appearance | white | white | white | white |

[Table 3]

| | Comparative Example 1 | Comparative Example 2 | Comparative Example 3 | Comparative Example 4 |
|---|---|---|---|---|
| $R_{Si}$ | 0.0033 | 0.0068 | 0.0075 | 0.0044 |
| $R_O$ | 0.016 | 0.016 | 0.014 | 0.014 |
| $R_C$ | 0.0011 | 0.00106 | 0.0011 | 0.00106 |
| $R_{Fe}$ | 0.0016 | 0.0015 | 0.0017 | 0.0016 |
| $R_{Al}$ | 0.00090 | 0.00090 | 0.0010 | 0.00080 |
| $R_{Ca}$ | 0.0021 | 0.0021 | 0.0021 | 0.0021 |
| $\alpha$-Phase percentage [%] | 92.3 | 91.8 | 90.7 | 91.8 |
| BET specific surface area [$m^2$/g] | 7.6 | 7.7 | 7.2 | 6.9 |
| D10 [$\mu$m] | 0.46 | 0.47 | 0.46 | 0.47 |
| D50 [$\mu$m] | 1.06 | 1.11 | 1.14 | 1.15 |
| D90 [$\mu$m] | 3.61 | 3.77 | 3.54 | 3.52 |
| $R_{Si}/R_O$ | 0.20 | 0.41 | 0.52 | 0.31 |
| $R_{Si} \times R_C/R_O$ [$\times 10^{-4}$] | 2.2 | 4.4 | 5.7 | 3.3 |
| $(R_{Si} + R_C)/R_O$ | 0.27 | 0.48 | 0.60 | 0.39 |
| $R_{Si} \times R_{Fe}/R_O$ [$\times 10^{-4}$] | 3.2 | 6.2 | 8.9 | 5.0 |
| $(R_{Si} + R_{Fe})/R_O$ | 0.30 | 0.50 | 0.64 | 0.43 |
| $R_{Si} \times R_C \times R_{Fe}/R_O$ [$\times 10^{-7}$] | 3.5 | 6.6 | 9.8 | 5.3 |

**EP 4 631 911 A1**

(continued)

|  | Comparative Example 1 | Comparative Example 2 | Comparative Example 3 | Comparative Example 4 |
|---|---|---|---|---|
| $(R_{Si} + R_C + R_{Fe})/R_O$ | 0.36 | 0.57 | 0.72 | 0.51 |
| Appearance | black | black | black | black |

**Claims**

1. A silicon nitride powder containing silicon nitride, non-nitride silicon, and oxygen, wherein:
   a ratio $(R_{Si}/R_O)$ of a mass ratio $R_{Si}$ of the non-nitride silicon in the silicon nitride powder with respect to a mass ratio $R_O$ of the oxygen in the silicon nitride powder is 0.19 or lower.

2. The silicon nitride powder according to claim 1, wherein:

   the silicon nitride powder further contains carbon, and
   a ratio $(R_{Si} \times R_C/R_O)$ of a product of the mass ratio $R_{Si}$ and a mass ratio $R_C$ of the carbon in the silicon nitride powder with respect to the mass ratio $R_O$ of the oxygen in the silicon nitride powder is $2 \times 10^{-4}$ or lower.

3. The silicon nitride powder according to claim 1, wherein:

   the silicon nitride powder further contains carbon, and
   a ratio $((R_{Si} + R_C)/R_O)$ of a sum of the mass ratio $R_{Si}$ and a mass ratio $R_C$ of the carbon in the silicon nitride powder with respect to the mass ratio $R_O$ of the oxygen in the silicon nitride powder is 0.25 or lower.

4. The silicon nitride powder according to claim 1, wherein:

   the silicon nitride powder further contains iron, and
   a ratio $(R_{Si} \times R_{Fe}/R_O)$ of a product of the mass ratio $R_{Si}$ and a mass ratio $R_{Fe}$ of the iron in the silicon nitride powder with respect to the mass ratio $R_O$ of the oxygen in the silicon nitride powder is $2.5 \times 10^{-4}$ or lower.

5. The silicon nitride powder according to claim 1, wherein:

   the silicon nitride powder further contains iron, and
   a ratio $((R_{Si} + R_{Fe})/R_O)$ of a sum of the mass ratio $R_{Si}$ and a mass ratio $R_{Fe}$ of the iron in the silicon nitride powder with respect to the mass ratio $R_O$ of the oxygen in the silicon nitride powder is 0.25 or lower.

6. The silicon nitride powder according to claim 1, wherein:

   the silicon nitride powder further contains iron and carbon, and
   a ratio $(R_{Si} \times R_C \times R_{Fe}/R_O)$ of a product of the mass ratio $R_{Si}$, a mass ratio $R_C$ of the carbon in the silicon nitride powder, and a mass ratio $R_{Fe}$ of the iron in the silicon nitride powder with respect to the mass ratio $R_O$ of the oxygen in the silicon nitride powder is $3 \times 10^{-7}$ or lower.

7. The silicon nitride powder according to claim 1, wherein:

   the silicon nitride powder further contains iron and carbon, and
   a ratio $((R_{Si} + R_C + R_{Fe})/R_O)$ of a sum of the mass ratio $R_{Si}$, a mass ratio $R_C$ of the carbon in the silicon nitride powder, and a mass ratio $R_{Fe}$ of the iron in the silicon nitride powder with respect to the mass ratio $R_O$ of the oxygen in the silicon nitride powder is 0.35 or lower.

8. The silicon nitride powder according to any one of claims 1-7, wherein the mass ratio $R_{Si}$ is 0.003 or lower.

9. The silicon nitride powder according to any one of claims 1-7, wherein an $\alpha$-phase percentage is 91% or higher.

11

Europäisches
Patentamt

European
Patent Office

Office européen
des brevets

## EUROPEAN SEARCH REPORT

**Application Number**

EP 25 16 7634

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/189539 A1 (DENKA COMPANY LTD [JP]) 5 October 2023 (2023-10-05) * examples 1-3; tables 1-3 * | 1-9 | INV. C01B21/068 |
| X,P | -& EP 4 477 633 A1 (DENKA COMPANY LTD [JP]) 18 December 2024 (2024-12-18) * paragraph [0054] * * paragraph [0061] * * examples 1-3; tables 1-3 * | 1-9 | |
| A | JP H06 219715 A (SHINETSU CHEMICAL CO) 9 August 1994 (1994-08-09) * claim 1; examples 1-5; table 1 * | 1-9 | |
| A | WO 2021/117829 A1 (UBE INDUSTRIES [JP]) 17 June 2021 (2021-06-17) * claims 1-24; examples 1-44; tables 1-3 * | 1-9 | |

**TECHNICAL FIELDS SEARCHED (IPC)**

C01B

The present search report has been drawn up for all claims

| Place of search | Date of completion of the search | Examiner |
|---|---|---|
| The Hague | 26 August 2025 | Sevillano Rodriguez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 7634

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2025

| Patent document cited in search report | | Publication date | Patent family member(s) | | Publication date |
|---|---|---|---|---|---|
| WO 2023189539 | A1 | 05-10-2023 | CN | 118922396 A | 08-11-2024 |
| | | | EP | 4477633 A1 | 18-12-2024 |
| | | | JP | 7437570 B1 | 22-02-2024 |
| | | | JP | WO2023189539 A1 | 05-10-2023 |
| | | | TW | 202346204 A | 01-12-2023 |
| | | | WO | 2023189539 A1 | 05-10-2023 |
| EP 4477633 | A1 | 18-12-2024 | CN | 118922396 A | 08-11-2024 |
| | | | EP | 4477633 A1 | 18-12-2024 |
| | | | JP | 7437570 B1 | 22-02-2024 |
| | | | JP | WO2023189539 A1 | 05-10-2023 |
| | | | TW | 202346204 A | 01-12-2023 |
| | | | WO | 2023189539 A1 | 05-10-2023 |
| JP H06219715 | A | 09-08-1994 | NONE | | |
| WO 2021117829 | A1 | 17-06-2021 | CN | 114787105 A | 22-07-2022 |
| | | | JP | 7201103 B2 | 10-01-2023 |
| | | | JP | WO2021117829 A1 | 17-06-2021 |
| | | | WO | 2021117829 A1 | 17-06-2021 |

EPO FORM P0459

For more details about this annex : see Official Journal of the European Patent Office, No. 12/82

**EP 4 631 911 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5193914 A

- JP 2004262756 A